# EUROPEAN PATENT APPLICATION

(11) **EP 3 639 654 A1**
(43) Date of publication of application: **22.04.2020**
(21) Application number: 19202637.5
(22) Date of filing: 11.10.2019
(51) Int. Cl.: A01G 31/02, A01G 31/04, A01G 9/029

(54) **SUPPORT DEVICE FOR HYDROPONIC CULTIVATION**

(30) Priority: 19.10.2018 IT 201800009602
(71) Applicant: Rosa Plast S.r.l. a socio unico, 33080 Porcia PN (IT)
(72) Inventor: CATTARUZZA, Attilio, 33080 Porcia PN (IT)
(74) Representative: Cercenà, Alice

(57) **Abstract**

The present invention concerns a support device (1) for hydroponic cultivation comprising a panel formed by a substantially parallelepiped hollow body, apt to float on a culture liquid and comprising a plurality of seats (30) containing blocks of growth substrate, said seats (30) being each defined by a top opening (31), lying on the top surface (21) of the panel (1), and a lower opening (32) lying on the lower surface (22) of the panel (1), and by a continuous lateral wall (33). In particular, said top openings (31) have an essentially square shape, said lower openings (32) having an essentially circular shape, and the diameter (D2) of each of said lower openings (32) has a smaller dimension than the dimension of the side (D1) of the corresponding top opening (31).

## Description

### TECHNICAL FIELD OF INVENTION

. The present invention refers to an improved support device for hydroponic cultivation, in particular for plants such as basil, mint, chives, lettuce, parsley, chicory and other cluster vegetables.

### BACKGROUND OF THE INVENTION

. A current commonly known method is to grow basil, mint, chives, lettuce, parsley, chicory or similar vegetables in water.

. For this purpose, a well-known method is to use supports consisting generally of polystyrene panels on which are formed appropriate cell-like seats adapted to contain blocks of growth substrate wherein are placed the seeds or the shoots of the product to be grown.

. Specifically, said blocks of growth substrate are essentially cubes of standard sizes, having a side of 37 mm, made for example of soil, peat, rock wool, fragments of coconut, perlite or similar products, and are adapted to allow the formation of the shoot, that is, the germination of the seed until the appearance of a few leaves, simply by sprinkling water on the seed.

. The growth of the shoot, starting from the germination of the seed can be carried out directly in the growth substrate contained in the panel or, preferably, the shoot is initially grown in a greenhouse, in controlled conditions of temperature and humidity, and is then transferred on the panel to be grown.

. The panel is then inserted and allowed to float inside a tank containing a solution of water and nutrients adapted for growing the hydroponic cultivation. Alternatively, the plants or the precursors thereof supported on the panel are sprinkled with said culture liquid.

. However, this solution entails various drawbacks: in the first place, polystyrene has a marked structural fragility that can result in a breakage of the panel during its handling, both in the phase of positioning the blocks of growth substrate and in the phase of removing the grown product, with the consequent loss of the final product. Obviously, these panels are not made to be walked-on.

. Furthermore, a polystyrene panel absorbs the growth liquid, thus allowing the proliferation of bacteria and mold, that are undesirable for the wholesomeness of the product.

. Another important element to consider is that the conventional polystyrene panels are not recyclable, and therefore, once their productive use is no longer possible, they must be appropriately disposed of, with a consequent increase in economic and environmental costs.

.In this regard, recent regulations call for progressively withdrawing this type of panels from the market and for a gradual relinquishment of the polystyrene panels currently in use so as to favor the use of biodegradable materials that are therefore more environmentally friendly.

.Generally, the cells containing the growth substrate are distributed uniformly over the whole extension of the panel and are near each other and directly adjacent, so as to form a sort of array; however, for some types of crops or in some seasons of the year it is not possible to use all the containing seats on the panel, since their nearness to each other would not allow a full vegetative spread of the grown plants, thus reducing the efficiency of the cultivation.

.Therefore, very often it is necessary to appropriately stagger the cells in which the blocks of growth substrate are to be contained and those left purposely empty to allow the optimal vegetative growth of the plants or the precursors thereof.

.In this manner, however, the surface of the panel is not used to best advantage. Moreover, the mechanized positioning of the blocks of growth substrate inside the containing seats becomes more complicated.

.One objective of the subject matter of the present invention is to overcome the drawbacks of the prior art by providing a support device for hydroponic cultivation that is improved in shape to increase the production yield of the cultivation and guarantee a crop of high quality.

. In the scope of the above objective, one important purpose is to provide a support device of standardized shape for hydroponic cultivation, such as to allow the production and storage of a single model that can be used for a great variety of crops, and in any season of the year.

.A further objective of the present invention is to obtain a support device for hydroponic cultivation that is easy to handle, both manually and in the automatic mode, and in which the positioning of the block of inert matter in the cells and all the subsequent operations necessary for growing the plants can be carried out easily in a mechanized mode.

.A further objective of the present invention consists of providing a support device for hydroponic cultivation that simplifies the cleaning and disinfection operations of the same at the end of the process, so as to allow its subsequent use.

.Another objective of the present invention is to provide support devices for hydroponic cultivation that can be easily and reliably stacked on each other, thus allowing a saving in terms of the space required to store them.

.A further and important objective of the present invention consists of providing a support device for hydroponic cultivation that can be obtained by means of a reliable process that can be easily implemented at the industrial level.

.One not least important objective of the present invention is to provide a support device for hydroponic cultivation that achieves the above objective and purposes at competitive costs of production, so that its use is also advantageous from the economic point of view, and that can be obtained by means of the usual well-known plants, machinery and equipment.

.The above objective and purposes, and others that will become more evident later, are achieved with a support device for hydroponic cultivation such as defined in claim 1.

### BRIEF DESCRIPTION OF THE DRAWINGS

. Advantages and characteristics of the invention will become more evident from the following description, given by way of example and without limits, with reference to the enclosed figures, wherein:
- figure 1 is a perspective view from above of a support device for hydroponic cultivation according to the present invention;
- figure 2 is a perspective view from below of a support device for hydroponic cultivation according to the present invention;
- figure 3 is a plan view of a support device for hydroponic cultivation according to the present invention;
- figure 4 illustrates, in a lateral view, a pair of support devices according to the present invention arranged stacked on each other.

### DETAILED DESCRIPTION OF THE INVENTION

. With reference to the previously mentioned figurers, reference numeral 1 indicates a support device for hydroponic cultivation according to the present invention.

.Said device 1 consists essentially of a panel, preferably made in a single piece of polymeric material, such as for example polyethylene, with the blow-molding process, adapted to float on a culture liquid.

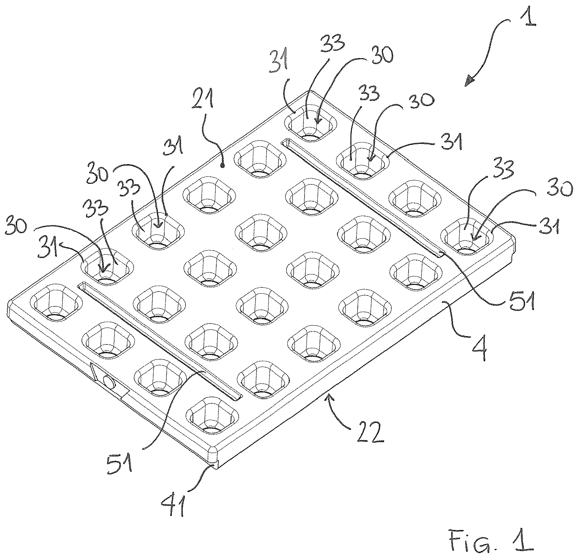

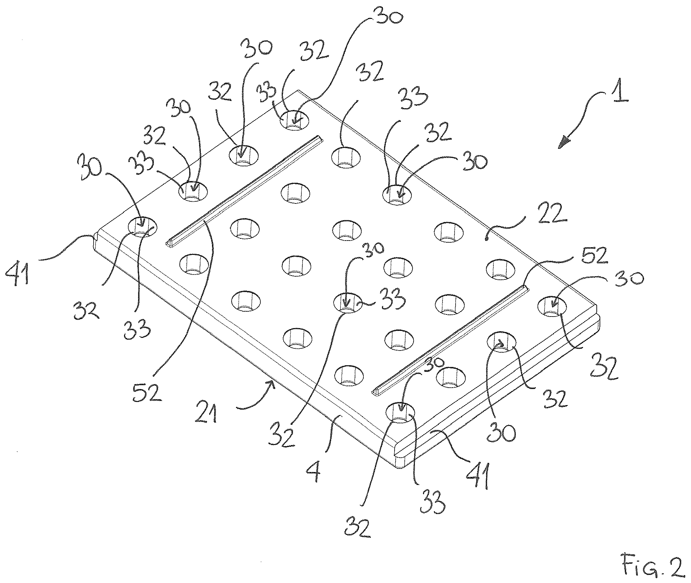

.In particular, as can be seen in figures 1 and 2, said panel 1 is made as a substantially hollow parallelepiped body having a top surface 21, a lower surface 22, that are substantially flat, parallel and facing each other, and connected perimetrically through an edge frame 4.

. On said panel 4 is obtained a plurality of containing seats 30, preferably set in an orderly arrangement and spaced from each other, made in a through manner, that is, adapted to put in a fluid communication with each other said top surface 21 and said lower surface 22.

. Consequently, said plurality of seats 30 defines a corresponding plurality of top openings 31, lying essentially on the top surface 21 of the panel 1, and a corresponding plurality of lower openings 32, lying essentially on the lower surface 22 of said panel 1.

. Each seat 30 is also advantageously defined by an essentially continuous lateral wall 33 that extends between the corresponding top and lower openings 31, 32.

. In particular, the top surface 21 of the panel 1, on which are formed the top openings 31 is adapted to remain, when in use, substantially above the surface of the culture liquid, while the lower surface 22, and consequently said lower openings 32, are adapted to be immersed, when the panel 1 is in use, in the same liquid.

. Each of said plurality of seats 30 is adapted to contain a corresponding block of growth substrate for hydroponic cultivation, supporting at least one seed or a shoot of the seedling or the vegetable that is to be grown.

.Advantageously, said top openings 31 have an essentially polygonal, and preferably square shape, having a dimension D1, preferably equal to about 45 mm, and preferably have beveled edges that connect the top surface 21 of the panel 1 with the side wall 33 of the corresponding cell 30. This simplifies the positioning, possibly also mechanized, of the blocks of growth substrate within the seats 30 on the panel 1.

. Preferably, said lower openings 32 are instead each shaped according to a circumference, advantageously inscribed within the square defined by the corresponding first opening 31 and having a diameter D2 whose dimension is advantageously smaller than the dimension of the side D1 of the latter.

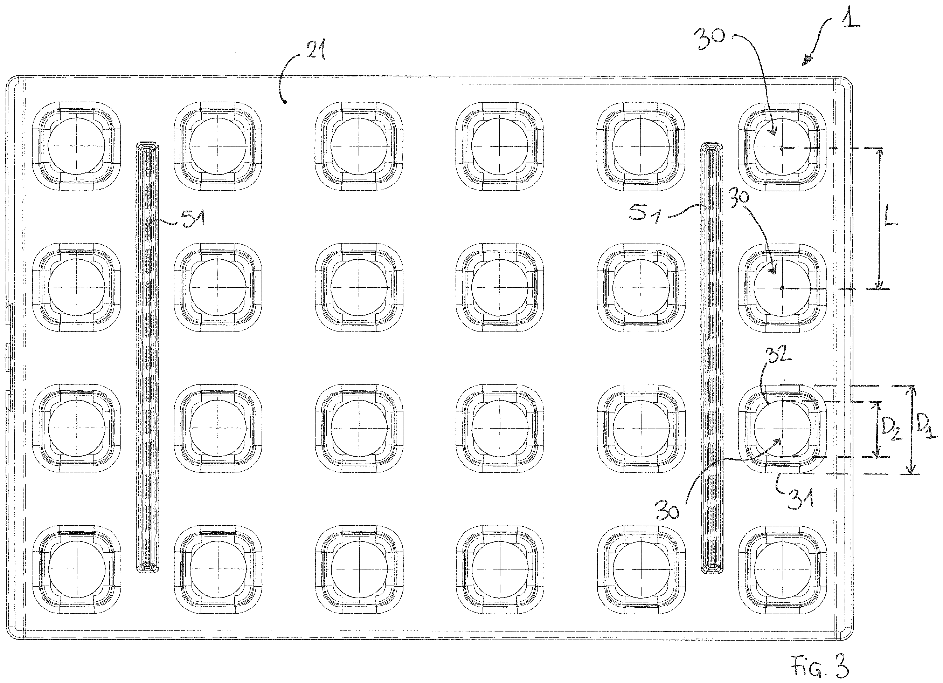

. In particular, as shown in figure 3, the panel 1 is advantageously made so that the ratio D1/D2 is included between 1.1 and 1.3.

.Advantageously, for each seat 30, said lower opening 32 connects with said internal lateral wall 33 with a curved profile: this makes it possible to stably hold the block of growth substrate contained therein, while guaranteeing a proper air circulation and allowing the roots of the seedling to grow and penetrate into the culture liquid through said lower opening 32.

. Experimental tests have in fact shown that the dimensions and the shape of the seats 30 as defined are optimal for containing the block of substrate and for the development of the root system of the plants in the growing stage; at the same time, the dimensions of the seat 30 also facilitate the subsequent operations of extracting the plant once the growth is completed.

. Furthermore, according to an advantageous characteristic of the present invention shown for reference in figure 3, said seats 30 are uniformly distributed on said panel 1 in an orderly manner, arranged as an array on rows and column, and spaced apart from each other so that the ratio between the center distance L between the geometrical center of a first top opening 31 and the geometrical center of a second top opening 31, adjacent to the first, and the dimension of the side D1 of said top openings 31, is substantially comprised between 2 and 2.5.

.This ratio has been specifically studied so that it is possible to use all the containing seats on the panel 1, for any type of crop and in any season of the year, guaranteeing the full plant growth of the vegetables and seedlings being grown, thus making it possible to improve the overall crop yield.

.According to a further advantageous characteristic of the present invention, the perimeter frame 4 of said panel 1 is provided with L-shaped grooves 41, preferably obtained on opposite sides of the panel 1, and transversal with respect to the main extension of the panel itself, such as to form handgrips for manually moving the panels 1.

. Furthermore, advantageously, said grooves 41 are also useful in a case in which the panels 1 are to be moved automatically for the mechanized filling of the seats 30: in fact, by controlling with an optical device such as for example a laser, the movement of a linear succession of panels 1 moved for example thanks to a conveyor, said grooves 41 make it possible to precisely locate the end part of a first panel and the first part of the next panel.

. According to a further advantageous characteristic of the present invention, on the lower surface 22 of the panel 1 are defined at least one pair of supporting ribs 52, essentially rectilinear and extending properly spaced, preferably transversal to the longitudinal extension of said panel.

.Said supporting ribs 52 have preferably a trapezoidal or rectangular cross section, and are configured such that when said panel 1 is arranged on a supporting plane, said ribs 52 create intermediate supports; consequently, if it becomes necessary, said panel 1 is sufficiently solid and sturdy to be walked upon, without the risk of its being damaged by bending it.

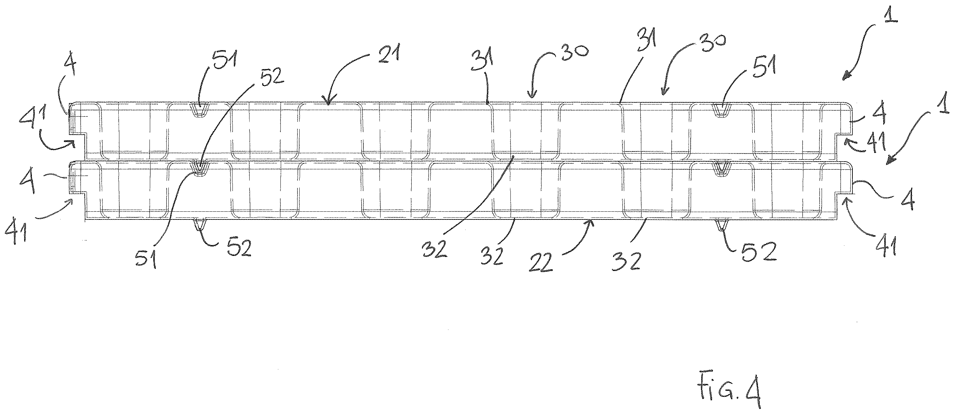

.Advantageously, on the top surface 21 of said panel 1 are provided corresponding recessed seats 51, extending essentially parallel with and facing the underlying supporting ribs 52; in particular, as can be seen in figure 4, said recessed seats 51 of a panel 1 are adapted to receive corresponding supporting ribs 52 of an identical and overlying panel 1, thus allowing a reliable stacking of the same, useful for example for storing the support devices that are not being used, or possibly also during certain growth phases, in particular during the stage of germination, that generally takes place within cells at controlled temperature, in which the support devices 1 are advantageously inserted stacked on each other to limit the dimensions.

. Moreover, according to an advantageous characteristic, said recessed seats 51 have a shape that substantially matches the shape of the corresponding support ribs 52, making in this manner possible a firm "groove and tongue" coupling between two stacked panels, and preventing accidental lateral movements that could cause the top panels to fall.

.This also makes it possible to create stacks of panels that may also be of substantial heights, thus increasing the feasibility of handling the support devices and thus also the logistics of the entire hydroponic cultivation system.

.Said support device 1 is preferably made of a thermoplastic polymeric material, such as polyethylene, which makes it easy to carry out the cleaning operations with highpressure jets of water or rotating brushes and the disinfection with chemical compounds without in any way damaging the support device, and thereby allowing their subsequent use.

. In this manner, the panel can be used without damage for many growth cycles, consisting of the operations of positioning, preferably by mechanized means, blocks of growth substrate in the relevant seats, handling, cutting or automatic collection of the product, washing and final disinfection.

.Advantageously, the panel is made of recycled and recyclable polymeric material, so that it can be returned, at the end of its useful life, to a plastic salvaging center, with obvious environmental advantages.

. In conclusion, from the above it is evident how a support device for hydroponic cultivation according to the present invention is improved in shape, thus enabling an increased yield and a high quality of the harvested crop.

. In fact, a support device for hydroponic cultivation has been achieved, suitable in particular for growing cluster vegetables, comprising a hollow panel 1, adapted to float on a culture liquid and comprising a plurality of containing seats 30 for blocks of growth substrate, said seats 30 being each defined between a top opening 31, lying on the top surface 21 of the panel 1, and a lower opening 32 lying on the lower surface 22 of the panel 1, and by a continuous lateral wall 33, which is characterized in particular in that the top openings 31 have an essentially square shape, while said lower openings 32 have an essentially circular shape, in which the diameter D2 of each of said lower openings 32 has a smaller dimension than the dimension of the side D1 of the corresponding upper opening 31.

.The square shape of the top openings facilitates in fact the insertion, possibly by mechanized means, of the blocks of growth substrate, while the lower openings of circular shape, and advantageously smaller than the corresponding top openings, provide an appropriate support to the blocks and allow at the same time the roots of the growing plant to reach into the culture liquid without being damaged, thus facilitating its extraction at the completion of the growth stage.

. Moreover, the particular configuration of the containing seats 30, and in particular the dimensional ratios between the side of the top openings and the diameter of the lower openings guarantee that, once they are occupied by the respective block of growth substrate, there are sufficient spaces for a proper air circulation and for the development of the root system of the plants or precursors thereof.

. Furthermore, the arrangement of the containing seats is such as to enable, in any season of the year and for a large variety of crops, the complete vegetative development of the growing plants.

.Thanks to a panel 1 according to the present invention, the positioning of the blocks of growth substrate in the seats and all the subsequent operations necessary for growing the crops can be carried out easily in a mechanized mode.

. Furthermore, advantageously, the panel of the present invention is quite easy to handle, both manually and in the automatic mode, thanks to the L-shaped grooves with which it is provided.

.Advantageously, a support device for hydroponic cultivation has been obtained that is stackable in a stable mode, allowing an economy in terms of spaces required for storing it.

.It is specified that the directional terms used to describe the present invention, such as "above, under, vertical, horizontal, lower and upper", as also any other similar directional term, will be interpreted with reference to a support device for hydroponic cultivation when in use, as shown in the enclosed figures.

. Naturally, the present invention is susceptible of many applications, modifications or variants without thereby departing from the scope of protection, as defined by the enclosed claims.

. Furthermore, the materials and equipment used to implement the present invention, as well as the shapes and dimensions of the individual components, can be the most suitable for the specific requirements.

## Claims

1. Support device (1) for hydroponic cultivation comprising a panel formed of a parallelepiped-shaped hollow body, adapted to float on a culture liquid and comprising a plurality of containing seats (30) for blocks of growth substrate, each of said seats (30) being defined between a top opening (31) lying on a top surface (21) of said panel (1), and a lower opening (32) lying on a lower surface (22) of said panel (1), and by a lateral continuous wall (33), **characterized in that** said top openings (31) being shaped essentially as a square, said lower openings (32) being shaped essentially as a circle, wherein the dimension of a diameter (D2) of said lower openings (32) is smaller than the dimension of a side (D1) of said top openings (31).

2. Support device (1) according to claim 1, wherein the ratio between the dimension of the side (D1) of said top openings (31) and the dimension of the diameter (D2) of said lower openings (32) is between 1,1 and 1,3.

3. Support device (1) according to claim 1 o 2, wherein said containing seats (30) are arranged as an array, spaced from each other such that the ratio between distance (L) between the center of a first top opening (31) and the center of a second top opening (31), arranged adjacent to said first top opening, and the dimension of a side (D1) of said top openings (31) is between 2 and 2,5.

4. Support device (1) according to any one of the preceding claims, wherein said top openings (31) have beveled edges connecting said top surface (21) of said panel (1) to said lateral wall (33) of a corresponding seat (30).

5. Support device (1) according to any one of the preceding claims, wherein said lower openings (32) are connected to the lateral wall (33) of the corresponding seat (30) with a curved profile.

6. Support device (1) according to any one of the preceding claims, wherein said panel (1) further comprises a perimeter frame (4) provided with L-shaped grooves (41) obtained on opposite sides extending transversally with respect to the longitudinal development of said panel (1).

7. Support device (1) according to any one of the preceding claims, wherein at least a pair of supporting ribs (52) extending transversally with respect to the longitudinal development of said panel (1) are obtained on said lower surface (22).

8. Support device (1) according to claim 7, wherein at least a pair of recesses (42) extending parallel and facing said pair of supporting ribs (52) are obtained on said top surface (21), said recesses (42) being shaped so as to receive corresponding supporting ribs (52) of an overlying panel (1)

9. Support device (1) according to any one of the preceding claims, made of polyethylene by means of a blow-molding process.
